# EUROPEAN PATENT APPLICATION

(11) **EP 4 538 834 A1**
(43) Date of publication of application: **16.04.2025**
(21) Application number: 24205229.8
(22) Date of filing: 08.10.2024
(51) Int. Cl.: G06F 3/01

(54) **MIXED REALITY DEVICE, PROCESSING METHOD, AND STORAGE MEDIUM**

(30) Priority: 11.10.2023 JP 2023176240
(71) Applicant: Kabushiki Kaisha Toshiba, Minato-ku Tokyo 105-0023 (JP)
(72) Inventor: YAMASHITA, Ren, Tokyo 105-0023 (JP); AOKI, Yusuke, Tokyo 105-0023 (JP); YOSHII, Takanori, Tokyo 105-0023 (JP); HAYASHI, Kyotaro, Tokyo 105-0023 (JP); NAKAMURA, Hiroaki, Tokyo 105-0023 (JP); HIRAHARA, Yoshiyuki, Tokyo 105-0023 (JP); FUKUDA, Masamitsu, Tokyo 105-0023 (JP); KOZAKAI, Takafumi, Tokyo 105-0023 (JP); NAMIOKA, Yasuo, Tokyo 105-0023 (JP)
(74) Representative: Hoffmann Eitle

(57) **Abstract**

According to one embodiment, a mixed reality device (100) is configured to display a virtual space to overlap a real space. The mixed reality device measures a first coordinate of the mixed reality device and calculates a first region (R1) by using the first coordinate as a reference. The mixed reality device detects an object present in the real space in a surrounding area of the mixed reality device and calculates a second region (R2) by using a second coordinate of the object as a reference. The mixed reality device outputs an alert (270) when the first region and the second region overlap.

## Description

### FIELD

Embodiments of the invention generally relate to a mixed reality device, a processing method, and a storage medium.

### BACKGROUND

Conventionally, a mixed reality device is used to perform a task efficiently. The mixed reality device can display a virtual space to overlap real space, and can provide various information to a worker. The worker can perform the task more efficiently by referring to the information displayed by the mixed reality device.

### BRIEF DESCRIPTION OF THE DRAWINGS

FIG. 1 is a schematic view illustrating a mixed reality device according to an embodiment;
FIG. 2 is a schematic view illustrating a work site;
FIG. 3 is a schematic view illustrating the work site;
FIG. 4 is a schematic view showing an output example of the mixed reality device according to the embodiment;
FIG. 5 is a flowchart showing processing according to the mixed reality device according to the embodiment;
FIG. 6A is a flowchart showing a calculation method of a first region, and FIG. 6B is a flowchart showing a calculation method of a second region;
FIGS. 7A and 7B are schematic views for describing processing according to the mixed reality device according to the embodiment;
FIGS. 8A to 8D are schematic views for describing processing according to the mixed reality device according to the embodiment;
FIG. 9 is a schematic view showing an output example of the mixed reality device according to the embodiment;
FIGS. 10A to 10C are schematic views showing calculation methods of the first region;
FIG. 11 is a schematic view showing an output example of the mixed reality device according to the embodiment;
FIG. 12 is a schematic view illustrating a task;
FIG. 13 is a schematic view showing an example of a tool;
FIG. 14 is a flowchart showing a processing method according to the embodiment; and
FIG. 15 is a schematic view showing a hardware configuration.

### DETAILED DESCRIPTION

According to one embodiment, a mixed reality device is configured to display a virtual space to overlap a real space. The mixed reality device measures a first coordinate of the mixed reality device and calculates a first region by using the first coordinate as a reference. The mixed reality device detects an object present in the real space in a surrounding area of the mixed reality device and calculates a second region by using a second coordinate of the object as a reference. The mixed reality device outputs an alert when the first region and the second region overlap.

Embodiments of the invention will now be described with reference to the drawings. The drawings are schematic or conceptual; and the relationships between the thicknesses and widths of portions, the proportions of sizes between portions, etc., are not necessarily the same as the actual values thereof. The dimensions and/or the proportions may be illustrated differently between the drawings, even in the case where the same portion is illustrated. In the drawings and the specification of the application, components similar to those described thereinabove are marked with like reference numerals, and a detailed description is omitted as appropriate.

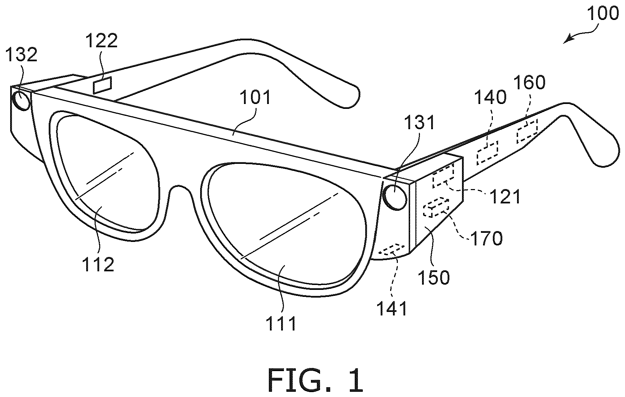

FIG. 1 is a schematic view illustrating a mixed reality device according to an embodiment.

The embodiment of the invention relates to a mixed reality device (a MR device). For example, as shown in FIG. 1, the MR device 100 according to the embodiment includes a frame 101, a lens 111, a lens 112, a projection device 121, a projection device 122, an image camera 131, a depth camera 132, a sensor 140, a microphone 141, a processing device 150, a battery 160, and a storage device 170.

In the illustrated example, the MR device 100 is a binocular head mounted display. Two lenses, i.e., the lens 111 and the lens 112, are fit into the frame 101. The projection device 121 and the projection device 122 respectively project information onto the lenses 111 and 112.

The projection device 121 and the projection device 122 display a recognition result of a body of a worker, a virtual object, etc., on the lenses 111 and 112. Only one of the projection device 121 or the projection device 122 may be included, and information may be displayed on only one of the lens 111 or the lens 112.

The lens 111 and the lens 112 are light-transmissive. The worker can visually recognize reality via the lenses 111 and 112. The worker also can visually recognize information projected onto the lenses 111 and 112 by the projection devices 121 and 122. The information is displayed to overlap real space by being projected by the projection devices 121 and 122.

The image camera 131 detects visible light and obtains a two-dimensional image. The depth camera 132 irradiates infrared light and obtains a depth image based on the reflected infrared light. The sensor 140 is a six-axis detection sensor and is configured to detect angular velocities in three axes and accelerations in three axes. The microphone 141 accepts an audio input.

The processing device 150 controls components of the MR device 100. For example, the processing device 150 controls the display by the projection devices 121 and 122. The processing device 150 detects movement of the visual field based on a detection result of the sensor 140. The processing device 150 changes the display by the projection devices 121 and 122 according to the movement of the visual field. The processing device 150 also is configured to perform various processing by using data obtained from the image camera 131 and the depth camera 132, data of the storage device 170, etc.

The battery 160 supplies power necessary for the operations to the components of the MR device 100. The storage device 170 stores data necessary for the processing of the processing device 150, data obtained by the processing of the processing device 150, etc. The storage device 170 may be located outside the MR device 100, and may communicate with the processing device 150.

The MR device according to the embodiment is not limited to the illustrated example, and may be a monocular head mounted display. The MR device may be an eyeglasses-type as illustrated, or may be a helmet-type.

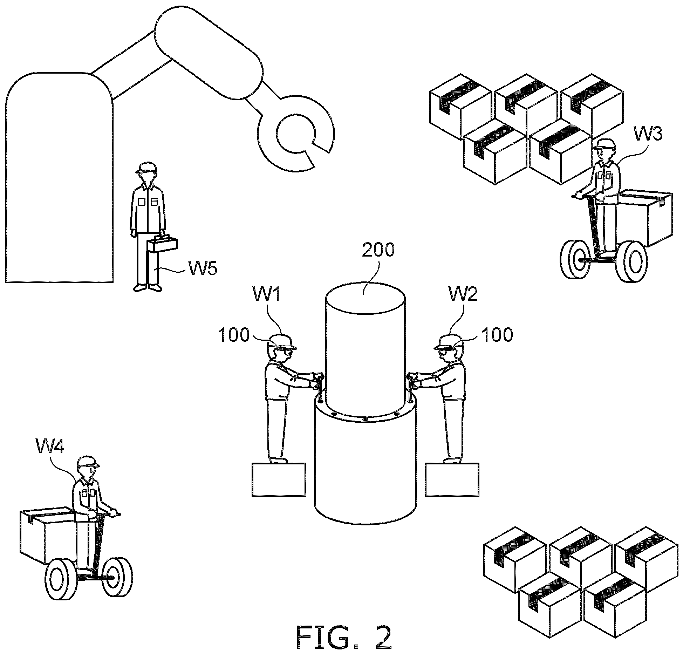

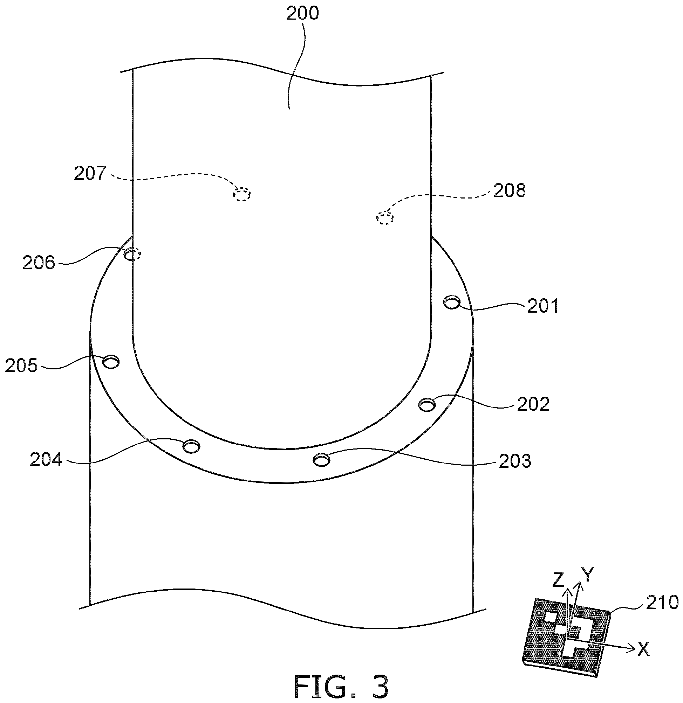

FIGS. 2 and 3 are schematic views illustrating a work site.

In the example shown in FIG. 2, workers W1 to W5 are performing tasks. The workers W1 and W2 are performing a task on an article 200. The workers W3 and W4 are using transport devices to transport articles. The worker W5 is performing a task on a robot. For example, the workers W1 and W2 wear the MR devices 100 and perform screw-tightening of the article 200.

As shown in FIG. 3, the article 200 is a cylindrical member, and includes fastening locations 201 to 208. The workers W1 and W2 use a wrench and an extension bar to fasten screws respectively at the fastening locations 201 to 208.

A marker 210 is located proximate to the task object. The marker 210 is an AR marker. As described below, the marker 210 is provided for setting the origin of the three-dimensional coordinate system. Instead of the AR marker, a one-dimensional code (a barcode), a two-dimensional code (a QR code (registered trademark)), etc., may be used as the marker 210. Or, instead of a marker, the origin may be indicated by a hand gesture. The processing device 150 sets the three-dimensional coordinate system by using multiple points indicated by the hand gesture as a reference.

When starting the task, the image camera 131 and the depth camera 132 image the marker 210. The processing device 150 recognizes the marker 210 based on the captured image. The processing device 150 sets the three-dimensional coordinate system by using the position and orientation of the marker 210 as a reference.

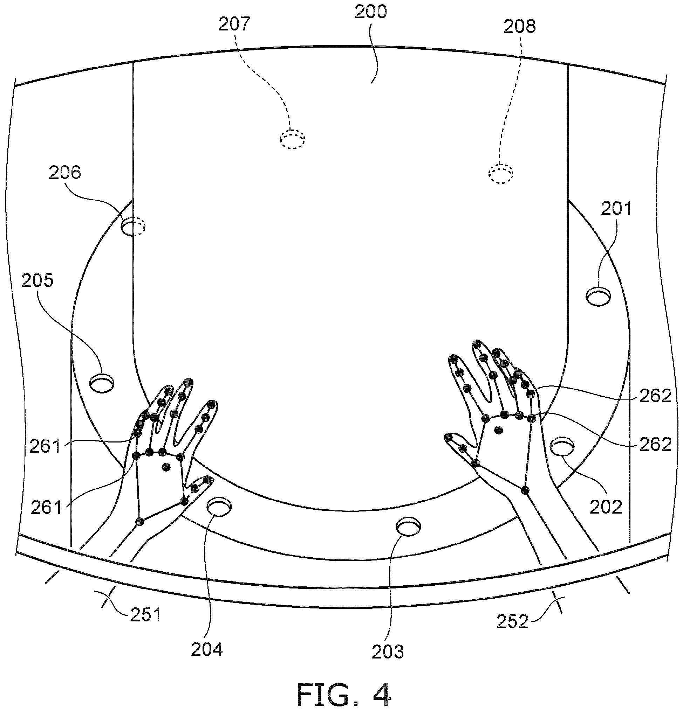

FIG. 4 is a schematic view showing an output example of the mixed reality device according to the embodiment.

In the task, the image camera 131 and the depth camera 132 image the article 200, a left hand 251 of the worker, and a right hand 252 of the worker. The processing device 150 uses hand tracking to recognize the left and right hands 251 and 252 based on the captured image. The processing device 150 may cause the projection devices 121 and 122 to display the recognition result on the lenses 111 and 112. Hereinafter, the processing device using the projection device to display information on the lens also is called simply "the processing device displaying information".

For example, as shown in FIG. 4, the processing device 150 displays the recognition result of the left hand 251 and the recognition result of the right hand 252 to overlap the hands in real space. In the illustrated example, multiple virtual objects 261 and multiple virtual objects 262, which are virtual, are displayed as the recognition results of the left and right hands 251 and 252. The multiple virtual objects 261 respectively indicate multiple joints of the left hand 251. The multiple virtual objects 262 respectively indicate multiple joints of the right hand 252. Instead of joints, virtual objects (meshes) that represent the surface shape of the left hand 251 and the surface shape of the right hand 252 may be displayed.

When the left hand 251 and the right hand 252 are recognized, the processing device 150 measures the coordinates of the hands. Specifically, each hand includes multiple joints such as a DIP joint, a PIP joint, an MP joint, a CM joint, etc. The coordinate of any of these joints is used as the coordinate of the hand. The centroid position of multiple joints may be used as the coordinate of the hand. Or, the center coordinate of the entire hand may be used as the coordinate of the hand.

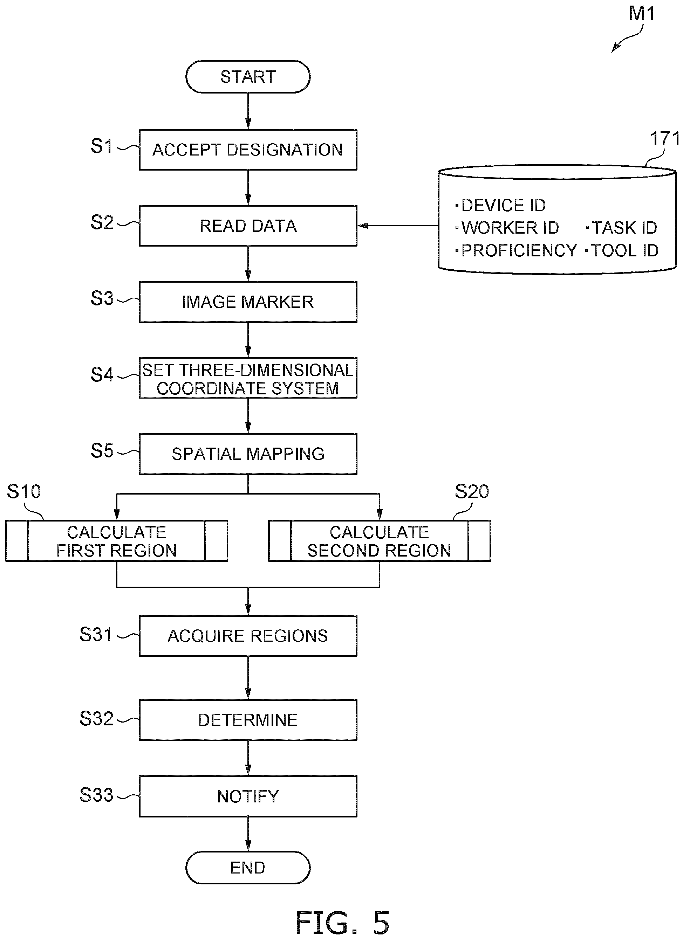

FIG. 5 is a flowchart showing processing according to the mixed reality device according to the embodiment.

In a processing method M1 shown in FIG. 5, the processing device 150 accepts a designation of the MR device to be used in the task, the worker performing the task, the task being performed, the tool to be used, etc. (step S1). The designation may be input by a worker, or may be input by a higher-level computer, etc. The workers, tools, etc., may be automatically designated according to a pre-generated schedule. Information such as the MR devices, the workers, the task, the tools, etc., may be associated with each other. For example, the MR devices are pre-associated with the workers. The task is pre-associated with the workers and the tools. In such a case, it is sufficient to designate one of the task, the worker, or the MR device.

The processing device 150 reads task data 171 (step S2) and acquires data related to the designated object. The task data 171 includes the ID of the MR device, the ID of the worker, the proficiency of the worker, the ID of the task, the ID of the tool, etc. When starting the task, the image camera 131 images the marker 210 (step S3). The processing device 150 recognizes the marker 210 based on the image and sets a three-dimensional coordinate system having the marker 210 as an origin (step S4). The processing device 150 performs spatial mapping to acquire a spatial map (step S5). In the spatial map, surfaces of objects in the surrounding area of the MR device 100 are represented by meshes. The spatial map includes the coordinates of the meshes.

The spatial mapping is repeatedly performed during the task. After performing spatial mapping at least once, the processing device 150 calculates a first region (step S10) and calculates a second region (step S20).

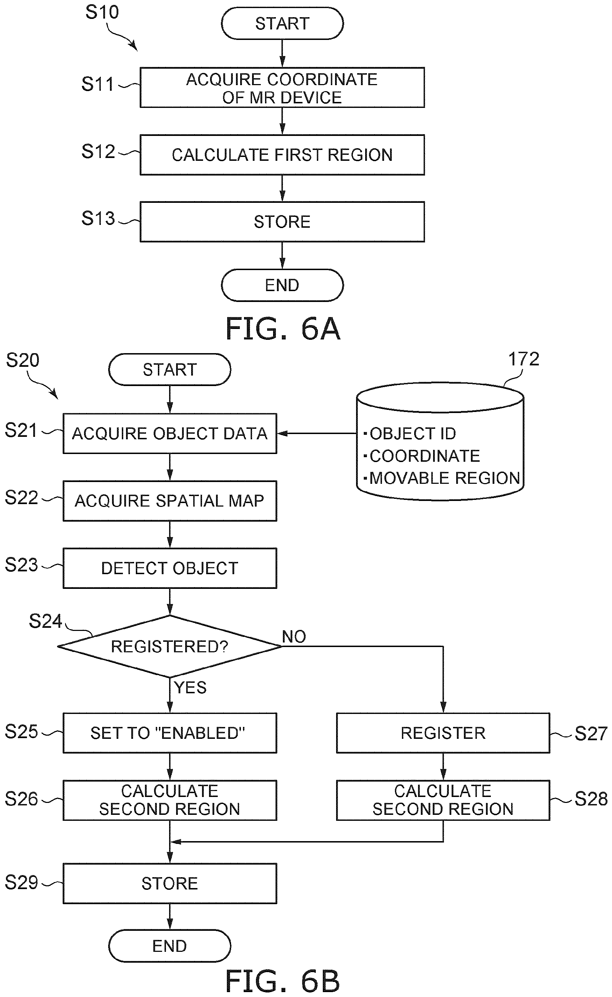

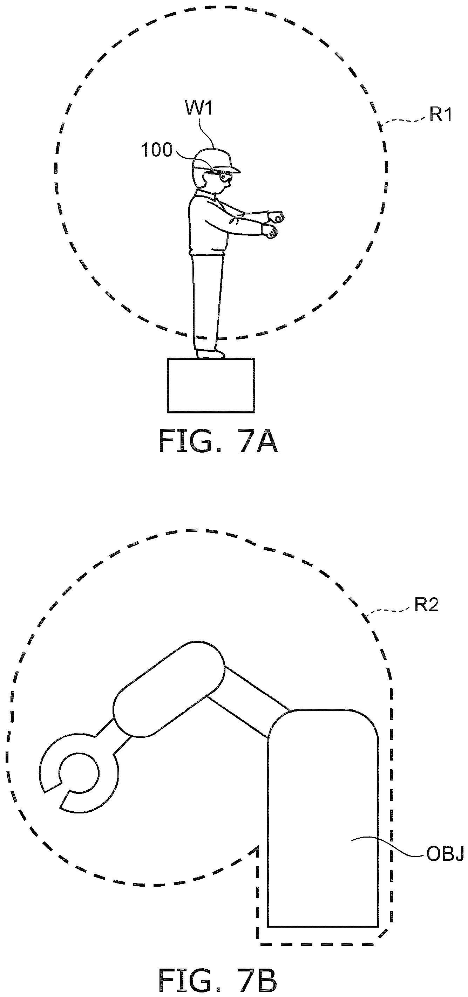

FIG. 6A is a flowchart showing a calculation method of the first region. FIG. 6B is a flowchart showing a calculation method of the second region. FIGS. 7A and 7B are schematic views for describing processing according to the mixed reality device according to the embodiment.

In step S10 as shown in FIG. 6A, the processing device 150 acquires the coordinate (a first coordinate) of the MR device 100 (step S11). As shown in FIG. 7A, the processing device 150 calculates a first region R1 by using the coordinate of the MR device 100 as a reference (step S12). In the illustrated example, the first region R1 is a sphere centered on the coordinate of the MR device 100. The diameter of the sphere is preset, and is determined by considering safety. The first region R1 is not limited to the example, and may be cylindrical. In such a case, the central axis of the cylinder is set to pass through the coordinate of the MR device 100 parallel to the vertical direction. The processing device 150 stores the calculated first region in memory (step S13).

In step S20 as shown in FIG. 6B, the processing device 150 reads object data 172 (step S21). The object data 172 includes information of physical objects that may be present in real space. For example, information of production equipment, transport devices, etc., is registered in the object data 172. The production equipment includes processing devices of workpieces, industrial robots, etc. The transport devices include AGVs, forklifts, cranes, etc. The IDs of the objects, the coordinates at which the objects are mounted, movable regions of the objects, etc., are registered in the object data 172. The coordinate of a person wearing another MR device 100 may be registered in the object data 172 by the other MR device 100.

Based on information obtained by the depth camera 132, the processing device 150 recognizes surfaces of objects in the surrounding area in real space and acquires a spatial map (step S22). For example, the surfaces of equipment, devices, persons, etc., present in the surrounding area are recognized. Based on the spatial map, the processing device 150 detects individual objects present in the surrounding area of the MR device 100 (step S23). For example, when the distance between the surfaces is greater than a preset threshold in the depth direction, the processing device 150 determines that the surfaces are of separate objects.

The processing device 150 determines whether or not the detected object is registered in the object data 172 read in step S21 (step S24). For example, the coordinate of the object and the surface information (the coordinate of the surface) of the object are registered in the object data 172. The processing device 150 compares the surface information of the detected object and the surface information of the registered object. For example, the processing device 150 calculates the positional error between the coordinate of the surface of the detected object and the coordinate of the surface of the registered object. The processing device 150 also calculates the error between the size of the surface of the detected object and the size of the surface of the registered object. When the positional error and the size error are, respectively, less than preset thresholds, the processing device 150 determines that the detected object is the registered object.

When the detected object is registered in the object data 172, the processing device 150 sets the detected object among the read objects to "enabled" (step S25). As shown in FIG. 7B, the processing device 150 calculates a second region R2 by using the coordinate (a second coordinate) of the detected object as a reference (step S26). At this time, the second region is calculated to include the movable region registered in the object data 172. For example, the second region is calculated by adding a safety region around the movable region.

When the detected object is not registered in the object data 172, the processing device 150 newly registers the object in the object data 172 as an unregistered object (step S27). The processing device 150 calculates the second region by using the coordinate of the detected object as a reference (step S28). When the second region is calculated by step S26 or S28, the processing device 150 stores the calculated second region in memory (step S29).

The processing device 150 performs the determination of step S24 for the individual objects detected in step S23. As a result, the second region is calculated for the detected objects.

The size of the second region for the unregistered object may be preregistered, or may be calculated according to the size of the detected object. For example, the size of the second region is calculated to increase as the size of the detected object increases. The second region R2 for the unregistered object may be a sphere centered on the coordinate of the object, or may be a cylinder. The central axis of the cylinder is set to pass through the center coordinate of the unregistered object parallel to the vertical direction.

After steps S10 and S20 as shown in FIG. 5, the processing device 150 acquires the calculated first region and the calculated second region from memory (step S31). The processing device 150 determines whether or not there is an overlap region between the first region and the second region (step S32). The processing device 150 outputs a notification corresponding to the determination result (step S33). For example, the worker is notified of the determination result by a display, a sound, or a vibration. The sound may be a notification sound or the like, or may be a voice message.

When the first region and the second region overlap, the processing device 150 determines that there is a possibility that the worker and the object in the surrounding area may contact. The processing device 150 outputs an alert of the danger. Based on the alert, the worker can recognize the presence of the object in the surrounding area of the worker that may come into contact.

When the first region and the second region do not overlap, the processing device 150 determines that there is little or no possibility of contact between the worker and the object. In such a case, the processing device 150 outputs a notification that there is no danger. Or, the processing device 150 may not output a notification to avoid obstructing the task with the notification.

The size of the first region and the size of the second region are arbitrary. It is favorable to set these sizes to have ample margins by considering safety.

Steps S5, S10, S20, and S31 to S33 are repeated at a prescribed interval. In other words, the spatial mapping, the calculation of the first region, the calculation of the second region, and the determination of the overlap of the regions are repeated. As a result, the likelihood of the worker contacting an object in the surrounding area can be reduced even when the positions of the objects in the surrounding area of the worker change over time.

Advantages of the embodiment will now be described.

In a work site, various objects may be present around a worker. For example, as shown in FIG. 2, production equipment, transport devices, etc., are present in the surrounding area of the worker. If the worker contacts production equipment or a transport device, there is a possibility that the worker may be injured. In particular, the worker has a narrower visual field when wearing a MR device than when not wearing the MR device. Various information to improve the work efficiency or safety is displayed in the MR device. When the information overlaps an object in real space, the object in real space becomes difficult to view. Therefore, the worker may not notice the approach of the object in real space, or may be slow in noticing the object. Therefore, there is an increased danger of the worker contacting an object such as production equipment, a transport device, etc., without noticing the object.

According to the embodiment of the invention, the MR device 100 measures the first coordinate of the MR device 100 and calculates the first region by using the first coordinate as a reference. Also, the MR device 100 is configured to recognize objects present in real space and acquire a spatial map. The MR device 100 calculates the second region by using the second coordinate of the recognized object as a reference. When the first region and the second region overlap, there is a possibility that the worker wearing the MR device 100 may contact the object in the surrounding area. In such a case, the MR device 100 outputs an alert.

By outputting the alert, the worker can be notified of the likelihood of contacting the object in the surrounding area. Based on the alert, the worker can recognize the presence of the object that may come into contact in the surrounding area of the worker. According to the embodiment of the invention, the safety of the wearer of the MR device 100 can be further increased.

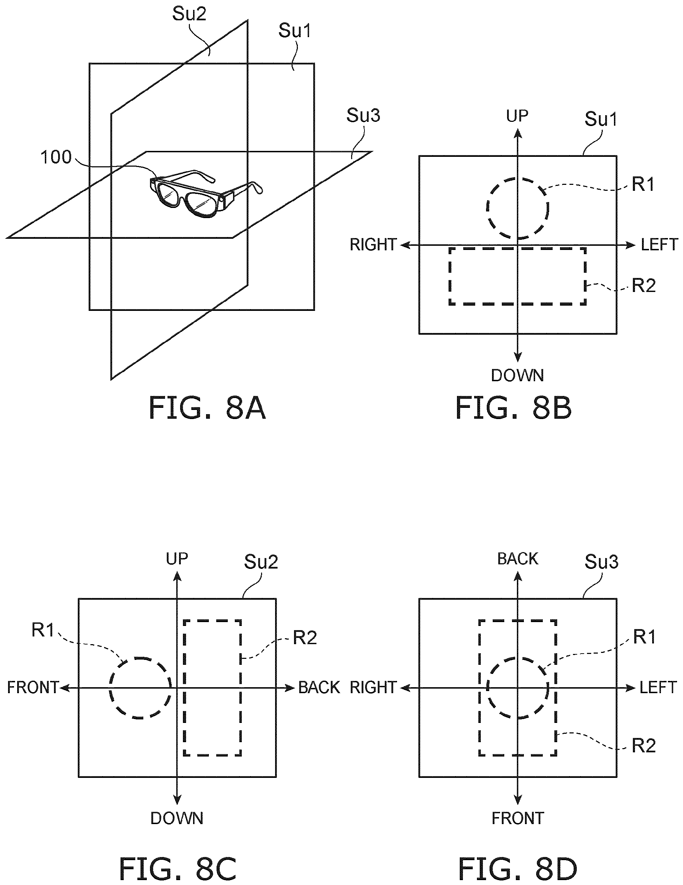

FIGS. 8A to 8D are schematic views for describing processing according to the mixed reality device according to the embodiment.

When the first region and the second region overlap, the processing device 150 may calculate a direction of likely contact. For example, as shown in FIG. 8A, the processing device 150 sets a first surface Su1 perpendicular to the longitudinal direction (a first direction), a second surface Su2 perpendicular to the lateral direction (a second direction), and a third surface Su3 perpendicular to the vertical direction (a third direction). The directions are determined using the orientation of the MR device 100 as a reference. The processing device 150 projects the first region and the second region onto the first to third surfaces Su1 to Su3. FIGS. 8B to 8D respectively show the results of projecting the first region and the second region onto the first surface Su1, the second surface Su2, and the third surface Su3.

By projecting the regions onto the first surface Su1, the overlap amount in the longitudinal direction of the first and second regions R1 and R2 can be calculated. By projecting the regions onto the second surface Su2, the overlap amount in the lateral direction of the first and second regions R1 and R2 can be calculated. By projecting the regions onto the third surface Su3, the overlap amount in the vertical direction of the first and second regions R1 and R2 can be calculated. The processing device 150 calculates the overlap amounts in the directions and compares the overlap amounts. The object is determined to be present in the direction having the greatest overlap amount when viewed from the MR device 100.

The danger level for each object may be registered in the object data 172. For example, the danger level is set to be higher for larger objects or for faster moving objects. When the first region and the second region are determined to overlap, the processing device 150 refers to the danger level of the object corresponding to the second region. The processing device 150 changes the notification according to the danger level. As the danger level increases, the notification that is output allows the worker to recognize that the danger is higher. For example, the processing device 150 may display an alert indicating the danger level. The processing device 150 may output a louder sound or stronger vibration as the danger level increases.

When the object is unregistered, the danger level may be set to a maximum. The danger level may be calculated according to the size or movement of the object. The processing device 150 may modify the size of the second region according to the danger level. The danger of contact between the object and the worker increases as the danger level of the object increases. The processing device 150 calculates the size of the second region to increase as the danger level increases. The danger due to contact between the worker and the object can be further reduced thereby.

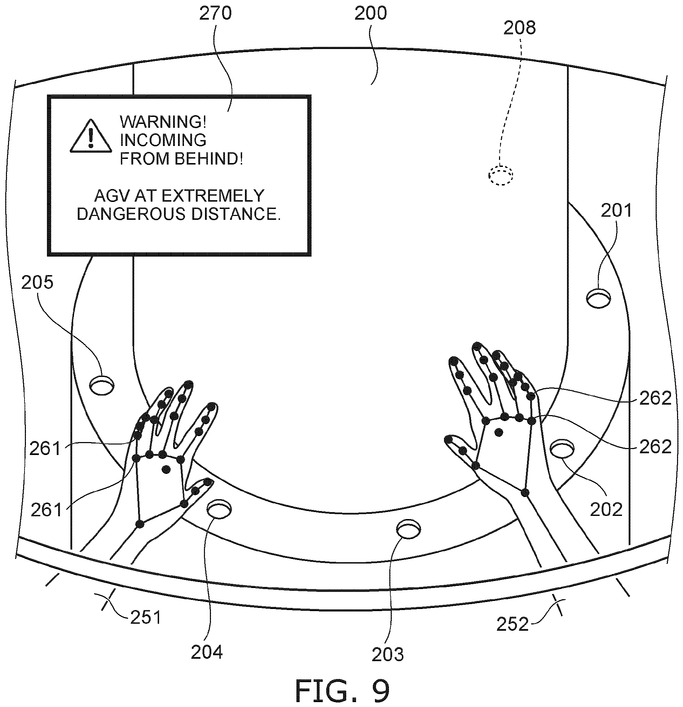

FIG. 9 is a schematic view showing an output example of the mixed reality device according to the embodiment.

When the first region and the second region overlap, the processing device 150 displays an alert 270 as shown in FIG. 9. In the illustrated example, the alert 270 indicates the likelihood of contact with the object, the direction of the object, the name of the object, and the danger level of the object. The likelihood of contact with the object is based on the determination result of the overlap between the first region and the second region. The direction of the object is based on the calculation result of the overlap direction of the first and second regions. The name of the object and the danger level of the object are registered in the object data 172. Such information may be output as a voice instead of the display of the alert 270 or in addition to the display of the alert 270.

When calculating the first region, the processing device 150 may modify the size of the first region according to the proficiency of the worker. "Proficiency" indicates the level of experience of the worker with the task. The worker is more experienced with the task as the proficiency increases. The likelihood of contacting the object is lower for a worker having high proficiency than for a worker having low proficiency. Accordingly, the processing device 150 calculates the first region to be smaller as the proficiency of the worker increases. As a result, the output frequency of the notification of the likelihood of contact between the worker and the object is reduced. Workers that have high proficiency can easily concentrate on the task.

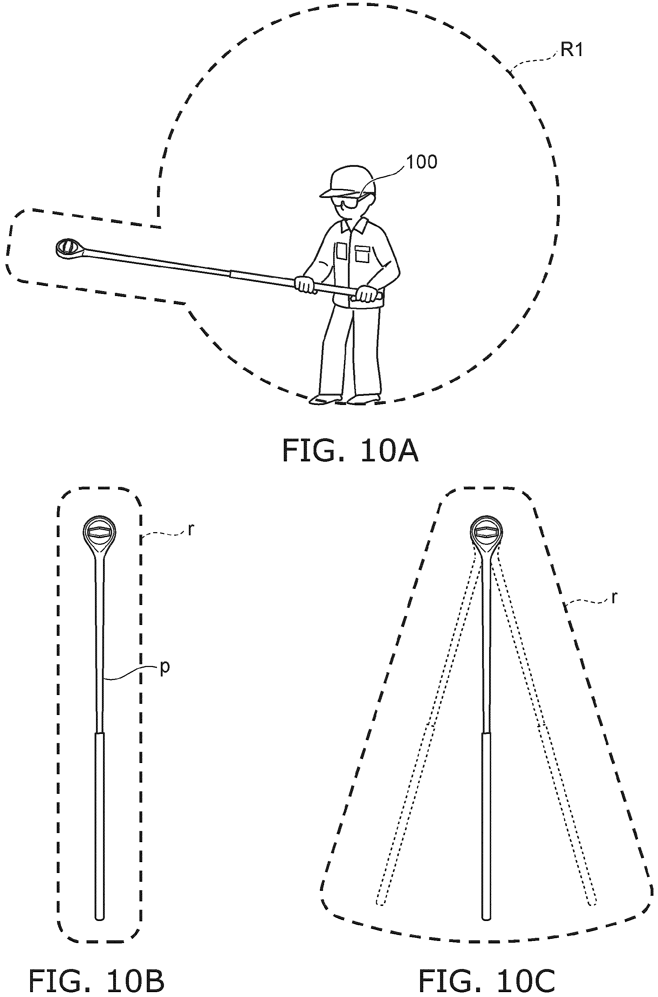

FIGS. 10A to 10C are schematic views showing calculation methods of the first region.

As shown in FIG. 10A, the processing device 150 may calculate the first region R1 so that a tool held by the worker is included in the first region R1. For example, the processing device 150 calculates a region that covers the tool based on the data of the tool registered in the task data 171.

Specifically, first, the processing device 150 recognizes the tool based on the image. For example, a marker is mounted to the tool; and the processing device 150 recognizes the marker. An image (a template image) of the tool may be prepared beforehand. The processing device 150 uses template matching to recognize the image of the tool in the overall image.

When the tool is recognized, the processing device 150 calculates a position p of the tool as shown in FIG. 10B. The processing device 150 uses the position p as a reference to set a tool region r that includes a region corresponding to the size of the tool and a region covering the surrounding area of the tool. The size of the tool and the size of the region of the surrounding area are pre-registered in the task data 171.

As shown in FIG. 10C, the tool region r may be set by also considering the range in which the tool moves. The processing device 150 calculates the first region by adding the tool region calculated by one of the methods to the region calculated by using the coordinate of the MR device 100 as the reference.

When a large tool is used, there is a possibility that the tool may contact another object. When the tool contacts another object, there is a possibility that the worker holding the tool may be injured, or the other object may be damaged. By calculating the first region to cover the tool, the likelihood of contact between the tool and the other object can be reduced, and the safety can be further increased.

Other than the information related to safety described above, the MR device 100 also can output information to support the task. Specific examples in which the MR device 100 is used to perform a task of turning a screw will now be described.

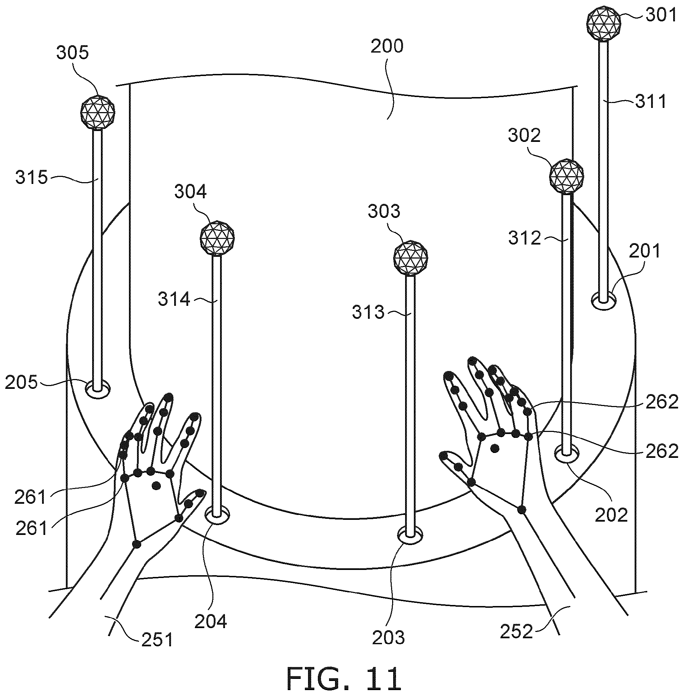

FIG. 11 is a schematic view showing an output example of the mixed reality device according to the embodiment.

As shown in FIG. 11, the processing device 150 displays virtual objects 301 to 305 and virtual objects 311 to 315. The virtual objects 311 to 315 are displayed respectively between the fastening locations 201 to 205 and the virtual objects 301 to 305. The virtual objects 311 to 315 respectively show which of the fastening locations correspond to the virtual objects 301 to 305.

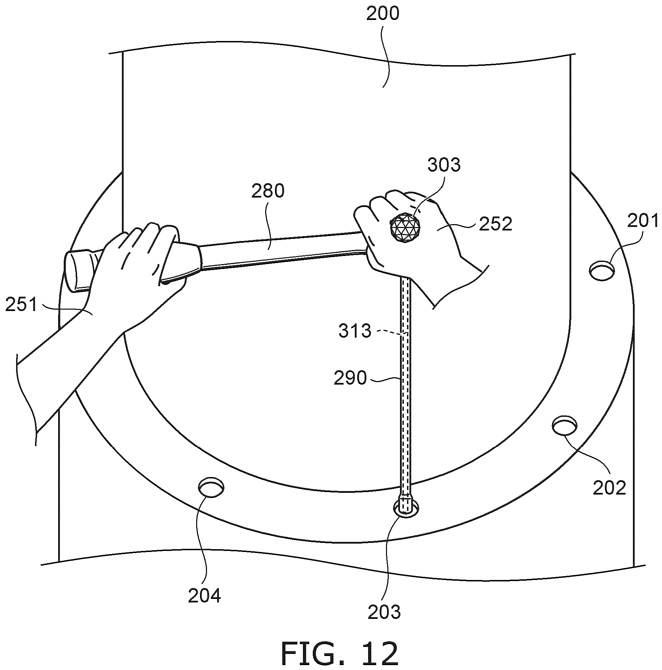

FIG. 12 is a schematic view illustrating a task.

For example, as shown in FIG. 12, a wrench 280 and an extension bar 290 are used to turn a screw at a fastening location. As an example, when tightening the screw at the fastening location 203, the worker places the screw in the screw hole of the fastening location 203. The worker causes one end of the extension bar 290 to engage the screw. The worker causes the head of the wrench 280 to engage the other end of the extension bar 290. The worker presses the head of the wrench 280 with one hand, and grips the grip of the wrench 280 with the other hand. By turning the wrench 280, the screw is tightened at the fastening location 203 via the extension bar 290.

At this time, the worker disposes the extension bar 290 so that the extension bar 290 approaches or contacts the virtual object 313. Also, the worker grips the head of the wrench 280 so that the hand contacts the virtual object 303. By displaying the virtual object, the worker can easily ascertain the positions at which the tool and the hand are to be placed when turning the screw at the fastening location 203. The work efficiency can be increased thereby.

In the illustrated example, the virtual objects 301 to 305 are spherical; and the virtual objects 311 to 315 are rod-shaped. The shapes of the virtual objects are not limited to the examples as long as the worker can visually recognize the virtual objects. For example, the virtual objects 301 to 305 may be cubic; and the virtual objects 311 to 315 may be wire-shaped. Virtual objects similar to the virtual objects 301 to 305 and the virtual objects 311 to 315 also are displayed at the fastening locations 206 to 208 which are not shown in FIG. 11.

After the virtual objects are displayed, the processing device 150 may determine whether or not a prescribed object contacts the virtual objects 301 to 305. For example, the processing device 150 determines whether or not a hand contacts the virtual object. Specifically, the processing device 150 calculates the distances between the coordinate of the hand and the virtual objects 301 to 305. When one of the distances is less than a preset threshold, the processing device 150 determines that the hand contacts that virtual object. As an example in FIG. 4, the diameter of the virtual objects 301 to 305 (spheres) corresponds to the threshold. The sphere is the range in which the hand is determined to contact the virtual object.

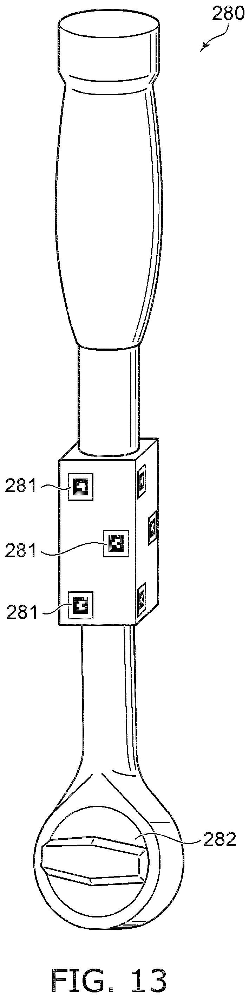

FIG. 13 is a schematic view showing an example of a tool.

The processing device 150 may determine whether or not the tool contacts the virtual objects 301 to 305. For example, as shown in FIG. 13, multiple markers 281 are mounted to the wrench 280. The processing device 150 recognizes the multiple markers 281 based on an image that is imaged by the image camera 131. The processing device 150 measures the coordinates of the markers 281. The positional relationships between the multiple markers 281 and a head 282 of the wrench 280 are preregistered. The processing device 150 calculates the coordinate of the head 282 based on the coordinates of at least three markers 281 that are recognized and the preregistered positional relationships. The processing device 150 calculates the distances between the coordinate of the head 282 and the virtual objects 301 to 305. When one of the distances is less than a preset threshold, the processing device 150 determines that the wrench 280 contacts that virtual object.

When the hand or the tool contacts one of the virtual objects 301 to 305, it can be estimated (inferred) that the screw is being turned at the fastening location corresponding to the one of the virtual objects 301 to 305. In the example shown in FIG. 12, based on the contact between the hand and the virtual object 303, it is estimated that the screw is being turned at the fastening location 203 corresponding to the virtual object 303. Hereinafter, the fastening location among one or more fastening locations for which it is estimated that the task is being performed based on the contact between a prescribed object and the virtual object is called the "task location". When the task location is estimated, the processing device 150 may record that the screw has been turned at the task location. Task record is automatically generated thereby.

The tool that is used may be a digital tool that can detect torque. In such a case, the processing device 150 receives the detected torque from the tool. The torque that is necessary for the fastening may be preset, and the tool may refer to the necessary torque. The tool determines whether or not the necessary torque is detected, and transmits the determination result to the processing device 150. The tool also can transmit the rotation angle, the time at which the torque was detected, etc., to the processing device 150. The processing device 150 associates the data received from the tool with data related to the task location. A more detailed task record is automatically generated thereby.

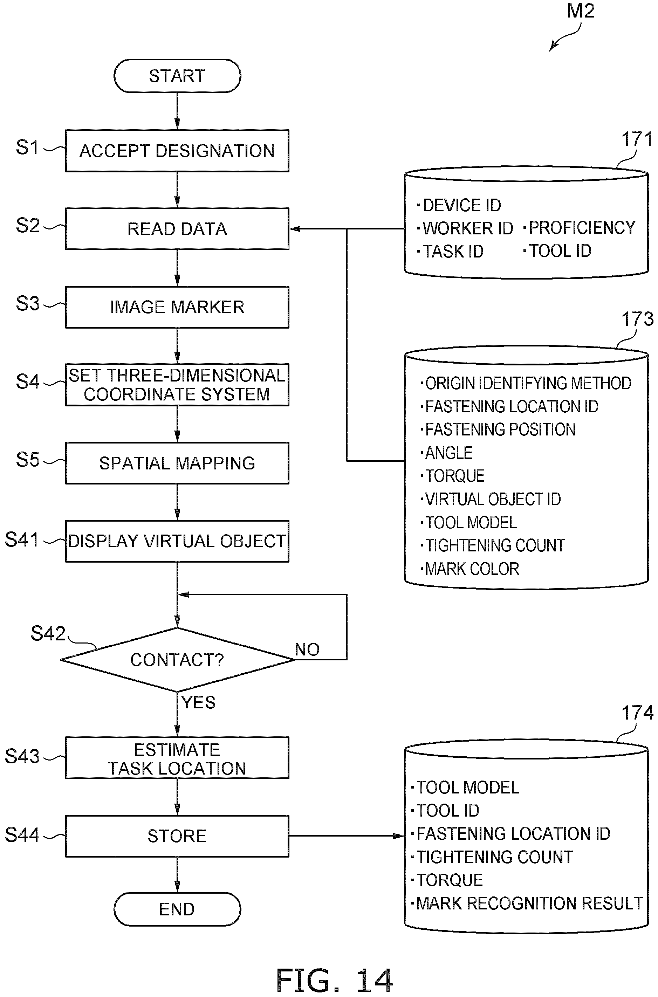

FIG. 14 is a flowchart showing a processing method according to the embodiment.

In the processing method M2 shown in FIG. 14, the processing device 150 accepts a designation of the MR device to be used in the task, the worker performing the task, the task being performed, the tool to be used, etc. (step S1). When the designation is accepted, the processing device 150 reads the task data 171 and fastening location data 173 (step S2). The fastening location data 173 stores the designation method of the origin, the ID of each fastening location, the position of each fastening location, the model of the tool to be used, the angle of the extension bar, the necessary tightening count, the necessary torque, the color of the mark, and the ID of each virtual object. The processing device 150 acquires the data related to the task being performed from the fastening location data 173.

A method that uses a marker, a method that uses a hand gesture, etc., are registered as the designation method of the origin. The ID of the fastening location is a unique character string for identifying each fastening location. The coordinate in the three-dimensional coordinate system based on the origin is registered as the position of the fastening location. The model of the tool indicates the classification of the tool by structure, exterior shape, performance, etc. For example, the length of the extension bar is designated based on the model of the extension bar. The angle is the limit of the angle of the extension bar that can engage the screw when the screw is turned at the fastening location.

In the task, there are cases where a mark is made when the screw is turned at the fastening location. "Mark color" refers to the color of the mark provided at each fastening location. When the screw is marked with different colors according to the number of times that the screw is turned, the color of the mark for the number of times is registered. The virtual object ID is a character string for identifying the data of the preregistered virtual object; and the virtual object ID is associated with each fastening location.

After step S2, the processing device 150 performs steps S3 to S5 similarly to the processing method M1 shown in FIG. 5. Subsequently, the processing device 150 displays the virtual object corresponding to the fastening location (step S41). The processing device 150 determines whether or not a prescribed physical object contacts the virtual object (step S42). When the prescribed object is determined to contact the virtual object, the task location is estimated (step S43). In other words, the processing device 150 estimates that the screw is being turned at the fastening location corresponding to the virtual object. The processing device 150 stores the record of the task at the task location (step S44).

In step S44, the processing device 150 associates the torque detected by the tool with the ID of the fastening location at which the screw is estimated to be turned, and stores the torque in history data 174. As shown in FIG. 14, the processing device 150 also may associate the model and ID of the tool used, the tightening count of the screw, and the recognition result of the mark with the ID of the fastening location. The mark is recognized by the processing device 150 based on the image that is imaged by the image camera 131. The processing device 150 extracts an aggregate of pixels of the mark color from the image and counts the number of pixels in the aggregate. When the number of pixels is greater than a preset threshold, a mark is determined to be present.

The processing device 150 performs steps S10, S20, and S31 to S33 shown in FIG. 5 in parallel with steps S41 to S44. As a result, even when the worker performs the task by paying attention to the virtual object, the worker easily recognizes the likelihood of contact with objects in the surrounding area.

The task data 171, the object data 172, and the fastening location data 173 are stored in the storage device 170 of the MR device 100. Or, the task data 171, the object data 172, and the fastening location data 173 may be stored in a memory region other than the MR device 100. In such a case, the processing device 150 accesses the task data 171, the object data 172, and the fastening location data 173 via wireless communication or a network.

Herein, examples mainly describe a screw being tightened at a fastening location. Embodiments of the invention are applicable not only when a screw is tightened at a fastening location, but also when a screw is loosened at a fastening location. For example, a screw is loosened at a fastening location when performing maintenance, inspection, or repair of a product. For example, according to embodiments of the invention, when the screw is loosened, the location at which the screw is being turned is estimated, and the task record related to the task location is automatically generated.

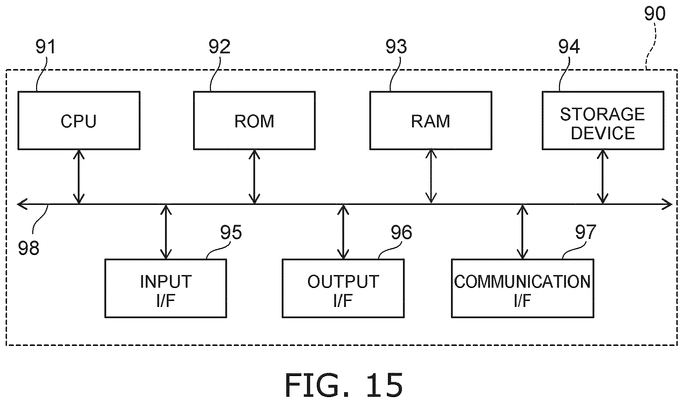

FIG. 15 is a schematic view showing a hardware configuration.

For example, a computer 90 shown in FIG. 15 is used as the processing device 150. The computer 90 includes a CPU 91, ROM 92, RAM 93, a storage device 94, an input interface 95, an output interface 96, and a communication interface 97.

The ROM 92 stores programs controlling operations of the computer 90. The ROM 92 stores programs necessary for causing the computer 90 to realize the processing described above. The RAM 93 functions as a memory region into which the programs stored in the ROM 92 are loaded.

The CPU 91 includes a processing circuit. The CPU 91 uses the RAM 93 as work memory and executes the programs stored in at least one of the ROM 92 or the storage device 94. When executing the programs, the CPU 91 executes various processing by controlling configurations via a system bus 98.

The storage device 94 stores data necessary for executing the programs and/or data obtained by executing the programs. The storage device 94 includes a solid state drive (SSD), etc. The storage device 94 may be used as the storage device 170.

The input interface (I/F) 95 can connect the computer 90 with an input device. The CPU 91 can read various data from the input device via the input I/F 95. The output interface (I/F) 96 can connect the computer 90 and an output device. The CPU 91 can transmit data to the output device (e.g., the projection devices 121 and 122) via the output I/F 96, and can cause the output device to display information.

The communication interface (I/F) 97 can connect the computer 90 and a device outside the computer 90. For example, the communication I/F 97 connects a digital tool and the computer 90 by Bluetooth (registered trademark) communication.

The data processing performed by the processing device 150 may be performed by only one computer 90. A part of the data processing may be performed by a server or the like via the communication I/F 97.

Processing of various types of data described above may be recorded, as a program that can be executed by a computer, on a magnetic disk (examples of which include a flexible disk and a hard disk), an optical disk (examples of which include a CD-ROM, a CD-R, a CD-RW, a DVD-ROM, a DVD±R, and DVD±RW), a semiconductor memory, or another non-transitory computer-readable storage medium.

For example, information recorded on a recording medium can be read by a computer (or an embedded system). The recording medium can have any record format (storage format). For example, the computer reads a program from the recording medium and causes the CPU to execute instructions described in the program, on the basis of the program. The computer may obtain (or read) the program through a network.

Embodiments of the invention include the following features.

### Feature 1

A mixed reality device, configured to:
display a virtual space to overlap a real space;
measure a first coordinate of the mixed reality device;
calculate a first region by using the first coordinate as a reference;
detect an object present in the real space in a surrounding area of the mixed reality device;
calculate a second region by using a second coordinate of the object as a reference; and
output an alert when the first region and the second region overlap.

### Feature 2

The mixed reality device according to feature 1, further configured to:
acquire a spatial map of the surrounding area of the mixed reality device; and
detect the object based on the spatial map.

### Feature 3

The mixed reality device according to feature 1 or 2, further configured to:
read data of a tool used in a task,
the first region being calculated to cover the tool.

### Feature 4

The mixed reality device according to any one of features 1 to 3, further configured to:
set a first direction, a second direction, and a third direction by using the mixed reality device as a reference, the first, second, and third directions being orthogonal to each other; and
detect an overlap between the first region and the second region in the first, second, and third directions.

### Feature 5

The mixed reality device according to feature 4, further configured to:
output information indicating a direction of the overlap between the first region and the second region when the overlap is detected.

### Feature 6

The mixed reality device according to any one of features 1 to 5, further configured to:
set a three-dimensional coordinate system by using an origin, the origin being preset; and
repeatedly measure the first coordinate and the second coordinate in the three-dimensional coordinate system.

### Feature 7

The mixed reality device according to feature 6, further configured to:
recognize a marker located in the real space based on an image including the marker; and
set the three-dimensional coordinate system by using the marker as the origin.

### Feature 8

The mixed reality device according to feature 6 or 7, further configured to:
display a virtual object by using a coordinate of a fastening location in the three-dimensional coordinate system as a reference,
the coordinate of the fastening location being preregistered.

### Feature 9

The mixed reality device according to feature 8, further configured to:
estimate that a screw is being turned at the fastening location when a prescribed object contacts the virtual object. Feature 10

A processing method,
the processing method being of a mixed reality device configured to display a virtual space to overlap a real space, the processing method including:
causing the mixed reality device to
measure a first coordinate of the mixed reality device,
calculate a first region by using the first coordinate as a reference,
detect an object present in the real space in a surrounding area of the mixed reality device,
calculate a second region by using a second coordinate of the object as a reference, and
output an alert when the first region and the second region overlap.

### Feature 11

A program, when executed by a mixed reality device configured to display a virtual space to overlap a real space, causing the mixed reality device to:
measure a first coordinate of the mixed reality device;
calculate a first region by using the first coordinate as a reference;
detect an object present in the real space in a surrounding area of the mixed reality device;
calculate a second region by using a second coordinate of the object as a reference, and
output an alert when the first region and the second region overlap.

### Feature 12

A non-transitory computer-readable storage medium configured to store the program according to feature 11.

According to the embodiments above, a mixed reality device, a processing method, a program, and a storage medium are provided in which the safety of a wearer can be further increased.

In the specification, "or" shows that "at least one" of items listed in the sentence can be adopted.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention. Moreover, above-mentioned embodiments can be combined mutually and can be carried out.

## Claims

1. A mixed reality device (100), configured to:
display a virtual space to overlap a real space;
measure a first coordinate of the mixed reality device;
calculate a first region (R1) by using the first coordinate as a reference;
detect an object present in the real space in a surrounding area of the mixed reality device;
calculate a second region (R2) by using a second coordinate of the object as a reference; and
output an alert (270) when the first region and the second region overlap.

2. The mixed reality device (100) according to claim 1, further configured to:
acquire a spatial map of the surrounding area of the mixed reality device; and
detect the object based on the spatial map.

3. The mixed reality device (100) according to claim 1, further configured to:
read data of a tool used in a task,
the first region (R1) being calculated to cover the tool.

4. The mixed reality device (100) according to claim 1, further configured to:
set a first direction (FRONT-BACK), a second direction (LEFT-RIGHT), and a third direction (UP-DOWN) by using the mixed reality device as a reference, the first, second, and third directions being orthogonal to each other; and
detect an overlap between the first region (R1) and the second region (R2) in the first, second, and third directions.

5. The mixed reality device (100) according to claim 4, further configured to:
output information (270) indicating a direction of the overlap between the first region (R1) and the second region (R2) when the overlap is detected.

6. The mixed reality device (100) according to any one of claims 1 to 5, further configured to:
set a three-dimensional coordinate system by using an origin, the origin being preset; and
repeatedly measure the first coordinate and the second coordinate in the three-dimensional coordinate system.

7. The mixed reality device (100) according to claim 6, further configured to:
recognize a marker (210) located in the real space based on an image including the marker; and
set the three-dimensional coordinate system by using the marker as the origin.

8. The mixed reality device (100) according to claim 6, further configured to:
display a virtual object (303) by using a coordinate of a fastening location in the three-dimensional coordinate system as a reference,
the coordinate of the fastening location being preregistered.

9. The mixed reality device (100) according to claim 8, further configured to:
estimate that a screw is being turned at the fastening location when a prescribed object contacts the virtual object (303).

10. A processing method,
the processing method being of a mixed reality device (100) configured to display a virtual space to overlap a real space, the processing method comprising:
causing the mixed reality device to
measure a first coordinate of the mixed reality device,
calculate a first region (R1) by using the first coordinate as a reference,
detect an object present in the real space in a surrounding area of the mixed reality device,
calculate a second region (R2) by using a second coordinate of the object as a reference, and
output an alert (270) when the first region and the second region overlap.

11. A non-transitory computer-readable storage medium configured to store a program,
the program, when executed by a mixed reality device (100) configured to display a virtual space to overlap a real space, causing the mixed reality device to:
measure a first coordinate of the mixed reality device;
calculate a first region (R1) by using the first coordinate as a reference;
detect an object present in the real space in a surrounding area of the mixed reality device;
calculate a second region (R2) by using a second coordinate of the object as a reference, and
output an alert (270) when the first region and the second region overlap.
